(19) **Europäisches Patentamt / European Patent Office / Office européen des brevets**

(11) **EP 3 198 311 B1**

(12) # FASCICULE DE BREVET EUROPEEN

(45) Date de publication et mention de la délivrance du brevet:
**03.04.2019   Bulletin 2019/14**

(21) Numéro de dépôt: **15774549.8**

(22) Date de dépôt: **24.09.2015**

(51) Int Cl.:
**G01W 1/10** *(2006.01)*    **G01W 1/12** *(2006.01)*

(86) Numéro de dépôt international:
**PCT/EP2015/071959**

(87) Numéro de publication internationale:
**WO 2016/046309 (31.03.2016 Gazette 2016/13)**

(54) **ENSEMBLE ET PROCÉDÉ DE DÉTECTION POUR L'IDENTIFICATION ET LE SUIVI DE NUAGE DANS UNE ZONE DU CIEL OBSERVÉE**

DETEKTIONSEINHEIT UND VERFAHREN ZUR IDENTIFIZIERUNG UND ÜBERWACHUNG VON WOLKEN IN EINEM BEOBACHTETEN BEREICH DES HIMMELS

DETECTION UNIT AND METHOD FOR IDENTIFYING AND MONITORING CLOUDS IN AN OBSERVED AREA OF THE SKY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2014   FR 1459124**

(43) Date de publication de la demande:
**02.08.2017   Bulletin 2017/31**

(73) Titulaire: **Reuniwatt**
**97490 Saint Denis (FR)**

(72) Inventeurs:
- **BERTIN, Clément**
  **F-24500 Fonroque (FR)**
- **CROS, Sylvain**
  **F-75019 Paris (FR)**
- **SCHMUTZ, Nicolas**
  **F-67800 Hoenheim (FR)**
- **LIANDRAT, Olivier**
  **F-05000 Neffes (FR)**
- **SEBASTIEN, Nicolas**
  **F-97400 Saint-Denis (FR)**
- **LALIRE, Samuel**
  **F-97410 Saint Pierre (FR)**

(74) Mandataire: **Ipside**
**7-9 Allées Haussmann**
**33300 Bordeaux Cedex (FR)**

(56) Documents cités:
**WO-A1-2013/124432    FR-A1- 2 363 790**

- **Paul W Nugent ET AL: "Infrared cloud imaging in support of Earth-space optical communication", OPTICS EXPRESS, vol. 17, n°10, 11 May 2009, 28 avril 2009 (2009-04-28), pages 7862-7872, XP055170537, Extrait de l'Internet: URL:http://www.opticsinfobase.org/DirectPD FAccess/20EA5CCD-A81F-E646-B249B2928ED6 1CA 8_179345/oe-17-10-7862.pdf?da=1&id=179345& seq=0&mobile=no [extrait le 2015-02-18]**
- **Lei Liu ET AL: "Comparison of Cloud Properties from Ground-Based Infrared Cloud Measurement and Visual Observations", JOURNAL OF ATMOSPHERIC AND OCEANIC TECHNOLOGY, vol. 30, no. 6, 1 June 2013 (2013-06-01), pages 1171-1179, XP055456083, US ISSN: 0739-0572, DOI: 10.1175/JTECH-D-12-00157.1**
- **STEPHEN SMITH ET AL: "Measuring Cloud Cover and Brightness Temperature with a Ground-Based Thermal Infrared Camera", JOURNAL OF APPLIED METEOROLOGY AND CLIMATOLOGY, vol. 47, no. 2, 1 February 2008 (2008-02-01), pages 683-693, XP055447082, ISSN: 1558-8424, DOI: 10.1175/2007JAMC1615.1**
- **SHAW J A ET AL: "Cloud Statistics Measured With the Infrared Cloud Imager (ICI)", IEEE TRANSACTIONS ON GEOSCIENCE AND REMOTE SENSING, IEEE SERVICE CENTER, PISCATAWAY, NJ, US, vol. 43, no. 9, 1 September 2005 (2005-09-01), pages 2000-2007, XP011138159, ISSN: 0196-2892, DOI: 10.1109/TGRS.2005.853716**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

## ARRIERE-PLAN DE L'INVENTION

Domaine de l'invention

La présente invention concerne un ensemble et un procédé de détection pour l'identification, notamment par l'estimation des propriétés physiques des nuages, et le suivi d'un ou plusieurs nuages dans une zone du ciel placée sous observation depuis le sol.

Elle vise également un procédé autorisant la détermination des conditions météorologiques réelles et de réaliser des prédictions météorologiques à court terme.

Arrière-plan technologique

L'évaluation de la nébulosité du ciel est traditionnellement réalisée par un observateur humain depuis le sol. Le contour de l'horizon que voit l'observateur sous un certain angle solide délimite la voûte céleste pour laquelle cet observateur va évaluer la nébulosité à l'estime.

A titre purement illustratif, un ciel dit couvert, c'est-à-dire entièrement occulté par les nuages, présente une estimation de nébulosité égale à 8 octas. L'unité de mesure de la nébulosité du ciel qu'est l'octa correspond donc à un huitième de la voûte céleste.

Toutefois, le caractère empirique de cette estimation est aujourd'hui incompatible avec les exigences toujours plus grandes de fiabilité et de précision requises dans certains domaines d'activité.

A titre illustratif, dans le domaine aéronautique, le pilote d'un aéronef doit avoir une connaissance précise des conditions météorologiques, et notamment de la nébulosité du ciel, aux abords d'un aéroport pour se poser ou décoller.

De même, la production d'électricité générée par une centrale photovoltaïque peut être qualifiée d'intermittente, car celle-ci va dépendre fortement des aléas climatiques, en particulier de la nébulosité du ciel.

En effet, l'ombre d'un nuage peut venir recouvrir au moins partiellement les panneaux photovoltaïques de cette centrale entrainant de fait une atténuation de la production électrique.

Afin de tenir la stabilité du réseau électrique, le gestionnaire de réseau doit alors piloter des outils de soutien au réseau afin de compenser une éventuelle chute de la production d'électricité d'origine photovoltaïque.

A titre d'exemple, ces outils de soutien peuvent être de simples batteries délivrant leur énergie sur le réseau électrique en cas de baisse prévisionnelle momentanée de la production électrique ou des turbines à combustion thermique en cas de baisse prévisionnelle longue de la production électrique.

Or, le pilotage de ces outils de soutien n'est aujourd'hui pas optimisé, faute d'outil fiable et précis de prévision de la production d'électricité d'origine photovoltaïque.

Ce manque de données génère des coûts directs (carburant consommé, vieillissement de l'installation) et indirects, tels que la génération de dioxyde de carbone ($CO_2$) en cas de démarrages intempestifs.

Il n'en demeure pas moins que l'énergie photovoltaïque est une source d'énergie inépuisable et relativement propre. Les centrales photovoltaïques connaissent donc un essor important qui va encore croître dans les prochaines années.

Des solutions techniques visant à identifier et suivre des nuages dans une région du ciel ont été proposées ces dernières années.

On connaît ainsi des caméras infrarouges utilisées pour enregistrer l'émission infrarouge de nuages afin d'en déterminer certaines caractéristiques telles que la température. De cette dernière, on déduit l'altitude du nuage correspondant.

Toutefois, on constate que ces mesures manquent de fiabilité car elles ne tiennent pas compte de la contribution de l'atmosphère placée entre la caméra infrarouge et le ou les nuages ainsi mesurés.

Or, la contribution de cette atmosphère peut s'avérer importante sur certaines plages de longueurs d'onde d'intérêts.

Il existe donc un besoin pressant pour un ensemble et un procédé de détection permettant de soustraire la contribution de l'atmosphère placée entre le détecteur et le ou les nuages pour identifier de manière précise un ou plusieurs nuages dans une zone du ciel observée depuis le sol et assurer le suivi de chacun d'entre eux.

Objet de l'invention

L'objectif de la présente invention est donc de proposer un procédé et un ensemble de détection pour identifier et suivre depuis le sol un ou plusieurs nuages dans une région d'observation du ciel donnée qui soient simples dans leur conception et dans leur mode opératoire, fiables et précis.

Un autre objet de la présente invention est un tel ensemble de détection fonctionnant de nuit comme de jour, robuste et facile à maintenir, et par conséquent, peu coûteux. Un tel ensemble de détection permettrait ainsi de manière avantageuse un fonctionnement automatisé dans des zones reculées.

Encore un objet de la présente invention est un procédé de prévision à court terme, par exemple à t+30 minutes, permettant de déterminer avec une grande exactitude l'atténuation à venir de l'ensoleillement sur des panneaux photovoltaïque résultant d'un effet d'ombre causé par un ou plusieurs nuages en progression vers une centrale photovoltaïque.

Un tel procédé permettrait au gestionnaire du réseau d'électricité de disposer d'informations fiables sur la prévision à court terme de la production d'électricité photovoltaïque, et en conséquence d'avoir une gestion facilité des outils de soutien au réseau.

## BREVE DESCRIPTION DE L'INVENTION

A cet effet, l'invention concerne un procédé de détection pour l'identification et le suivi d'un ou plusieurs nuages épais dans une zone du ciel observée depuis le sol.

Selon l'invention, on réalise entre autres les étapes suivantes :

a) collecter au moins une partie des flux infrarouges thermiques émis dans ladite zone du ciel observée et les envoyer vers au moins un détecteur infrarouge thermique, ledit au moins un détecteur infrarouge thermique comportant au moins un capteur sensible auxdits flux dans une bande de longueurs d'onde déterminée,

b) réaliser au moins une mesure de la température et de l'humidité relative de l'air réelles au niveau du sol et en déduire la distribution verticale de la température et de la vapeur d'eau,

c) simuler ou obtenir l'ensemble de données relatives au signal infrarouge thermique émis par un ciel de référence pour ladite distribution verticale de température et de vapeur d'eau ainsi déduite,

d) soustraire de l'ensemble de données mesurées par ledit au moins capteur, l'ensemble de données ainsi simulées ou obtenues de manière à déterminer la présence ou non d'un ou plusieurs nuages dans ladite zone d'observation du ciel,

e) traiter l'ensemble des données ainsi obtenues pour calculer l'épaisseur optique et/ou l'altitude de chaque nuage dans ladite zone d'observation du ciel.

On entend par « au sol », la surface du sol, cette dernière pouvant présenter une altitude positive ou négative par rapport au niveau de la mer, ou une partie telle que le sommet, d'une construction ou habitation, par exemple un immeuble. Le procédé de la présente invention ne concerne donc pas des dispositifs de mesure embarqués par exemple à bord d'un aéronef ou d'un satellite.

L'évolution de l'ombre d'un nuage au sol dépend de son altitude, de même que son impact sur le rayonnement dépend de son épaisseur optique.

Le présent procédé de détection permet de manière avantageuse d'améliorer la précision des prévisions par la détermination de l'épaisseur optique et de l'altitude de chaque nuage dans la zone de ciel observée après soustraction aux mesures réelles réalisées de la contribution de l'atmosphère.

Le rayonnement atmosphérique dépendant de la colonne de vapeur d'eau (PWV = Wp) et de la température au sol (exprimée en flux montant, Ls), on peut écrire la fonction de corrélation affine :

$$L_{sky} = A \ x \ L_S \ x \ W_p + B \ x \ W_p + C \ x \ L_c + D$$

La colonne de vapeur d'eau est mesurable par radiosondage ou estimable par la relation de Reitan :

$$Ln(W_p) = a \ x \ T_{dew} + b$$

Un ensemble de seuils est déterminé pour segmenter les images thermiques à partir de $\Delta Tb$, la différence de température de brillance entre un ciel de référence et chaque nuage. Ces seuils sont estimés à partir des caractéristiques techniques du détecteur infrarouge thermique.

Avantageusement, le ciel de référence est une zone de ciel clair. De préférence, des ensembles de données relatives au signal infrarouge thermique émis par ce ciel de référence pour des distributions verticales de température et de vapeur d'eau différentes sont stockés dans une unité de stockage. On peut ainsi accéder aisément à ces ensembles de données et charger un ensemble de données correspondant à la distribution verticale de température et de vapeur d'eau déduite à l'étape b).

Alternativement, de tels ensembles de données peuvent être simulés, ou encore calculés, par des moyens de traitement comportant une unité de calcul telle qu'un ordinateur.

Par ailleurs, le présent procédé permet à partir de mesures réelles réalisées au niveau du sol de déduire la distribution verticale de température et de vapeur d'eau.

Ces mesures de la température au sol et de l'humidité de l'air au niveau du sol permettent ainsi de manière avantageuse de remplacer la connaissance de la variation verticale de la température et de vapeur d'eau obtenue typiquement par des moyens auxiliaires et complexes à mettre en oeuvre. A titre purement illustratif, la distribution verticale est généralement dérivable de données satellitaires ou encore de données obtenues par ballons sondes.

Cette déduction de la distribution verticale de la température et de la vapeur d'eau en un lieu donné à partir de mesures réelles réalisées au niveau du sol présente la fiabilité requise. Elle est réalisée à partir de données connues telles que des profils atmosphériques préalablement modélisés issus de données satellites et de ballons sonde, moyennés par saisons et zones climatiques ; enregistrées dans une unité de stockage et accessible à des moyens de traitement comprenant une unité de calcul telle qu'un ordinateur sur lequel est installé un logiciel approprié de traitement des données.

Dans différents modes de réalisation particuliers de ce procédé, chacun ayant ses avantages particuliers et susceptibles de nombreuses combinaisons techniques possibles:

- préalablement à l'étape a), on a étalonné ledit au moins un capteur dudit détecteur infrarouge thermique en mettant en oeuvre une seule surface de référence à température ambiante.

  Il peut s'agir d'un cache noir placé devant le détecteur infrarouge thermique. L'offset est calculé avec la température de l'obturateur mesurée par un thermomètre.

- l'étape e) de traitement de l'ensemble des données comprend une étape d'inversion du modèle de transfert radiatif permettant de déterminer la distribution spatiale horizontale de l'épaisseur optique et de l'altitude de l'unique couche nuageuse ou de l'ensemble de nuages dans ladite zone d'observation du ciel. De préférence, pour calculer l'épaisseur optique et l'altitude de chaque nuage aux longueurs d'onde d'intérêts, on détermine préalablement le modèle de nuage et on simule le rayonnement de chaque nuage en fonction du modèle de nuage ainsi déterminé.

  Les mesures au sol fournies par ledit au moins un thermomètre et ledit au moins un hygromètre permettent auxdits moyens de traitement de converger vers une solution idéale par une étape de traitement basée sur un logiciel assurant l'inversion de modèle de transfert radiatif.

  En effet, les profils verticaux de température et de vapeur d'eau déduits des mesures au sol lors de l'étape b) sont des éléments connus de la situation météorologiques. Les éléments inconnus sont l'altitude et l'épaisseur optique des nuages. L'inversion du modèle consiste à rechercher la solution idéale (couple : altitude ; épaisseur optique) qui minimise la différence entre le rayonnement infrarouge thermique simulé par le modèle de transfert radiatif et celui mesuré par le capteur. Pour ce faire, le logiciel assurant l'inversion fait varier les valeurs du couple (altitude ; épaisseur optique) tout en maintenant constantes les valeurs des profils verticaux de température/vapeur d'eau. Ainsi, grâce aux mesures de température et vapeur d'eau, les moyens de traitement permettent de converger vers la solution idéale.

- on utilise un capteur optique définissant une zone d'observation du ciel à partir du sol d'au moins 4,6 stéradians pour déterminer à partir de la texture et de la couleur de chaque nuage détecté par ledit capteur optique, le type de nuage correspondant et en déduire une plage d'altitudes de chaque nuage présent dans ladite zone d'observation du ciel.

  Ce capteur optique autorise un apprentissage préalable par le logiciel de traitement des ensembles de données, des nuages susceptibles d'être détectés dans la zone d'observation du ciel laquelle est liée au site d'installation de l'ensemble de détection. On facilite ainsi l'étape e) de traitement des données.

  De préférence, la zone d'observation du ciel d'au moins 4,6 stéradians est obtenue grâce à un capteur optique comportant un objectif hypergone (*"Fisheye"*) Avantageusement, cet objectif hypergone aura une largeur de champ au moins égale à 150°. A titre purement illustratif, cet objectif pourra être un objectif hypergone circulaire ayant une couverture de 180° dans toutes les directions, donnant ainsi une image délimitée circulairement.

La présente invention a encore pour objet un ensemble de détection pour la mise en oeuvre du procédé d'identification et de suivi d'un ou plusieurs nuages épais dans une zone du ciel observée depuis le sol tel que décrit précédemment, cet ensemble comprenant :

- un miroir ayant une surface de miroir courbe convexe ou conique, la surface dudit miroir étant tournée vers au moins un détecteur infrarouge thermique pour collecter au moins une partie des flux infrarouges thermiques émis dans ladite zone du ciel observée et les renvoyer vers ledit au moins un détecteur infrarouge thermique,
- ledit au moins un détecteur infrarouge thermique comportant au moins un capteur sensible auxdits flux dans une bande de longueurs d'onde déterminée, chaque capteur émettant des signaux de mesure,

- des moyens de traitement des signaux émis par ledit ou lesdits capteurs,
- au moins un thermomètre et au moins un hygromètre pour mesurer la température et l'humidité relative de l'air réelles au niveau du sol et reliés auxdits moyens de traitement, et
- lesdits moyens de traitement permettant de déterminer à partir de ces mesures la distribution verticale de température et de vapeur d'eau pour corriger la contribution de l'atmosphère entre ledit ensemble et le ou les nuages.

Cet ensemble de détection qui est destiné à être placé au sol, fonctionne avantageusement de jour comme de nuit. La détection de nuit autorise le suivi de l'évolution du plafond nuageux avant l'aube et de prévoir ainsi l'évolution au cours des premières heures de la journée.

La surface de miroir courbe convexe peut ainsi être une surface de miroir formée de manière sphérique, elliptique ou parabolique convexe. Une surface de miroir conique permet avantageusement d'améliorer la détection sur des angles zénithaux très élevés, par exemple compris entre 60° et 90°.

De préférence, ledit au moins un thermomètre et ledit au moins un hygromètre comprennent des moyens de communication sans fil pour adresser leurs mesures auxdits moyens de traitement ou à une unité de stockage enregistrant lesdites données, ladite unité de stockage étant reliée auxdits moyens de traitement.

Dans différents modes de réalisation particuliers de cet ensemble de détection, chacun ayant ses avantages particuliers et susceptibles de nombreuses combinaisons techniques possibles:

- ledit au moins un détecteur infrarouge thermique comporte une pluralité d'éléments sensibles au rayonnement infrarouge agencés selon une matrice, lesdits éléments sensibles étant des microbolomètres.
  Un tel détecteur infrarouge thermique à calibration automatique, par exemple par rapport à une surface de référence à température ambiante, rend le présent ensemble économique et de mise en oeuvre rapide en ce qu'aucune calibration préalable avec des corps noirs n'est requise.
  En outre, les éléments sensibles ne nécessitant pas de système de refroidissement, l'ensemble est d'une utilisation très simple et peut fonctionner de manière entièrement autonome.
- l'ensemble comporte une roue à filtres comportant au moins deux filtres distincts.
  Chaque filtre permet de filtrer de manière sélective les flux infrarouges thermiques reçus par ledit détecteur avant que ces flux ne soient reçus par ledit au moins un capteur dudit détecteur infrarouge thermique.
  De préférence, ce détecteur infrarouge thermique comporte une unité de stockage comportant des données liées aux filtres, à un ou plusieurs objets cibles dans le ciel mesurés au moyen de chaque filtre et des données permettant d'identifier le filtre de ladite roue à sélectionner pour la mesure d'un objet cible particulier dans le ciel. Ces dernières données peuvent être adressées à un élément de déplacement de ladite roue à filtres de sorte que les moyens de traitement adressant un signal de commande à cet élément de déplacement, ladite roue à filtres est déplacée par ces élément de déplacement de sorte qu'un filtre adapté est positionné pour la mesure dudit objet cible dans la zone de ciel observée. De même, l'unité de stockage peut comporter un ensemble de données relatives au réglage du détecteur infrarouge thermique en fonction du filtre de ladite roue sélectionnée.
- au moins lesdits signaux émis par ledit ou lesdits capteurs sont des signaux de communication sans fil, lesdits moyens de traitement comportant des moyens de réception pour recevoir lesdits signaux de communication sans fil émis par ledit ou lesdits capteurs.
  Ces signaux de communication sans fil peuvent être basés sur les protocoles suivants : IEEE 802.11 b/g/n (Wi-Fi), IEEE 802.15.1 (Bluetooth), IEEE 802.16 (WiMax), ZigBee IEEE 802.15.4 ou encore GSM ou GPRS.
  Bien entendu, lesdits moyens de traitement peuvent comporter des moyens pour émettre et recevoir des signaux de communication sans fil.
- D étant la distance séparant ledit au moins un détecteur dudit miroir et A étant l'angle d'ouverture dudit au moins un détecteur, ledit miroir présente un rayon R au moins égal à D x tan(A/2).
  Pour un encombrement réduit donné, on améliore ainsi significativement la résolution de l'ensemble de détection.
- ledit ensemble comprend des moyens de communication sur un réseau mobile du type GSM/GPRS/UMTS, un réseau filaire fixe ou encore sur un réseau de communication sans fil du type Wi-Fi pour collecter des données, telles que des données météorologiques du lieu de déploiement dudit ensemble, et/ou envoyer des données (telles que des images ou mesures), liées aux résultats obtenues par lesdits moyens de traitement.
  De préférence, cet ensemble comprend également une unité de stockage pour y enregistrer lesdites données, ladite unité de stockage étant reliée auxdits moyens de traitement de sorte que ces derniers puissent accéder à ces données et éventuellement, y stocker d'autres données.
  De préférence, ledit ensemble comporte un photomètre, un système de mesure LIDAR ou RADAR pour obtenir des données complémentaires qui seront utilisées dans la détermination des propriétés du ou des nuages présents dans ladite zone du ciel observée.

La présente invention concerne encore un procédé de prévision de la position d'un ou plusieurs nuages dans le ciel.

Selon l'invention, on détermine à partir de l'ensemble de données obtenues à un instant t par le procédé d'identification et de suivi d'un ou plusieurs nuages dans une zone du ciel observée depuis le sol, tel que décrit précédemment, le déplacement et l'évolution à un instant t + $\Delta$t de chacun des nuages de ladite zone d'observation.

A titre purement illustratif, cette estimation du mouvement des nuages est réalisée à partir d'images de la zone du ciel observée obtenues de manière consécutive à partir du détecteur infrarouge thermique et d'un procédé de traitement d'images connu sous le nom de « flot optique » pour détecter le mouvement d'un nuage dans cette zone.

La présente invention trouve des applications dans différents domaines techniques :

- surveillance aéroportuaire : surveillance automatique de l'état du ciel,
- détermination ou prédiction des fenêtres temporelles favorables à la communication laser entre un satellite et un terminal de réception de communications optiques,
- réception par terminal embarqué, par exemple à bord d'un aéronef, de signaux provenant du sol,
- Astronomie.

## BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :

- la figure 1 représente schématiquement un ensemble de détection pour la caractérisation et le suivi de nuages dans une zone du ciel observée depuis le sol selon un mode de réalisation particulier de la présente invention;
- la figure 2 montre une image brute obtenue avec l'ensemble de détection de la Fig. 1 ;
- la figure 3 montre le signal infrarouge thermique émis par un ciel clair pour une distribution verticale de température et de vapeur d'eau déterminée à partir de mesures réelles réalisées avec le thermomètre et l'hygromètre de l'ensemble de la Fig. 1 ;

- la figure 4 montre, à partir d'un grand nombre de mesures de températures de brillance, la détermination empirique des gradients de température de brillance en fonction de l'angle zénithal, pour différentes classes de température de brillance ;
- la figure 5 montre les températures de brillance équivalentes au zénith a pour l'image représentée à la Fig. 2 ;
- la figure 6 montre une image corrigée de la zone du ciel observée depuis le sol obtenue à partir de la Figure 3 ;

## DESCRIPTION DETAILLEE DE MODE DE REALISATION DE L'INVENTION

Tout d'abord, on note que les figures ne sont pas à l'échelle.

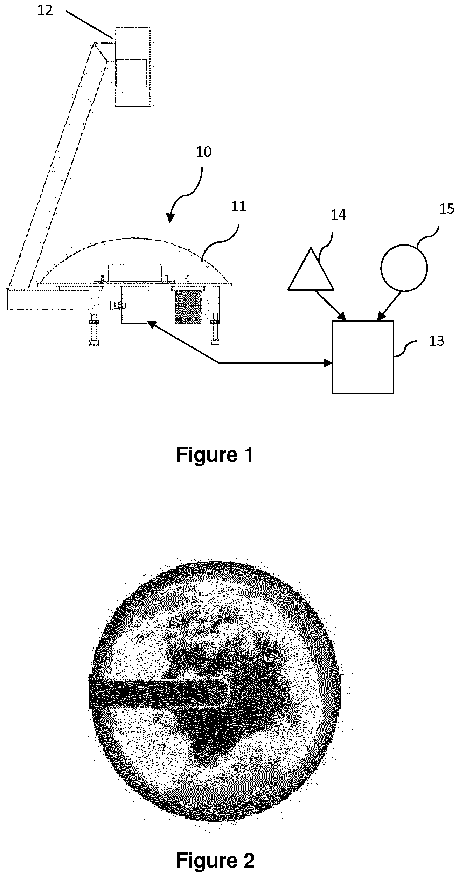

La Figure 1 montre un ensemble de détection pour la caractérisation et le suivi de nuages dans une zone du ciel observée depuis le sol selon un mode de réalisation particulier de la présente invention.

L'ensemble de détection comprend un miroir 10 ayant une surface de miroir 11 sphérique courbe.

La surface de miroir 11 est orientée vers une caméra 12 infrarouge thermique placée sur l'axe optique de ce miroir à une distance d de cette surface de miroir 11 assurant la compacité de l'ensemble de détection.

Avantageusement, l'angle d'ouverture de la caméra 12 infrarouge thermique étant ici égal à 62° et la distance d séparant cette caméra 12 du miroir 10 étant de 0,3 m pour conserver la compacité de l'ensemble, le diamètre du miroir sphérique est de 0,36 m.

La surface de ce miroir 11 assure la collecte d'au moins une partie des flux infrarouges thermiques émis dans la zone du ciel observée depuis le sol et renvoie les flux collectés vers la caméra 12 infrarouge thermique.

Cette caméra 12 infrarouge thermique comporte des capteurs (non représentés) sensibles à ces flux infrarouges thermiques dans une bande de longueurs d'onde déterminée, chaque capteur émettant des signaux de mesure. De manière avantageuse, ces capteurs sont ici des microbolomètres agencés sous forme d'une matrice.

Le miroir 10 sphérique convexe est revêtu d'un revêtement optique réfléchissant dans une bande de longueurs d'onde adéquate pour la mesure infrarouge avec la caméra 12 infrarouge thermique.

A titre d'exemple, ce revêtement optique est réfléchissant au moins dans la bande de longueurs d'onde à laquelle est sensible les capteurs de la caméra, par exemple entre 7,5 et 14 microns, et encore mieux entre 9 et 14 microns.

L'ensemble comporte encore des moyens 13 de traitement des signaux émis par les capteurs. Ces moyens 13 de traitement comprennent ici un ordinateur sur lequel sont exécutés un ou plusieurs logiciels de traitement de données pour traiter les signaux reçus des capteurs, les stocker et ou les envoyer à distance par un moyen de communication.

L'ensemble comporte encore un thermomètre 14 et un hygromètre 15 qui sont placés à proximité immédiate du miroir 10 pour mesurer la température et l'humidité relative de l'air réelles au niveau du sol. Ces deux instruments sont reliés également auxdits moyens 13 de traitement, lesquels reçoivent les signaux émis par ces instruments pour les stocker et les traiter.

Les moyens 13 de traitement permettant de déterminer à partir de ces mesures réelles réalisées au niveau du sol, la distribution verticale de température et de vapeur d'eau qui servira à la correction de la contribution de l'atmosphère entre ledit ensemble et le ou les nuages.

Les Figures 2 à 6 montrent un exemple de mesure réalisée avec l'ensemble de détection précédemment décrit.

Bien que donnant de bons résultats, la correction de la contribution atmosphérique avec un ciel de référence tel qu'un ciel clair, peut encore être améliorée par une correction adaptative qui permet de retrouver la bonne température zénithale en fonction de la situation (nuage ou ciel clair):

$$T = (T_h - a) \times (\theta/90)^b + a$$

Avec Th température à l'horizon (K), b paramètre empirique du gradient, θ angle zénithal (rad) et a la température au zénith (K).

La température de brillance a décrit l'état du nuage en termes d'altitude et d'épaisseur optique au zénith.

La température minimale est celle du ciel clair (sans nuage), la température maximale est celle du nuage le plus bas et opaque. Toutes les températures intermédiaires correspondent à des couples altitude / épaisseur optique.

Cette correction permet de connaître la température de brillance équivalente pour un angle zénithal donné.

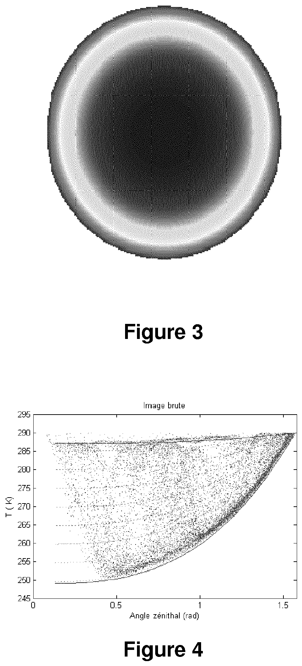

La figure 4 montre, à partir d'un grand nombre de mesures de températures de brillance (une mesure est représentée par point), la détermination empirique des gradients de température de brillance (signal infrarouge thermique) en fonction de l'angle zénithal, pour différentes classes de température de brillance. Ce gradient est visible dans les cas de ciel clair comme le montre la figure 3.

Pour chaque pixel de l'image, on réalise les étapes suivantes :

- calculer un gradient de référence pour chaque température de brillance zénithale du vecteur a, et
- comparer le pixel aux gradients de référence (courbes en pointillé sur la Figure 4, l'axe des x représentant l'angle zénithal (rad), l'axe des ordonnées représentant la Température (K)).

Le pixel qui sera retenu pour la correction est la température de brillance au zénith du gradient le plus proche.

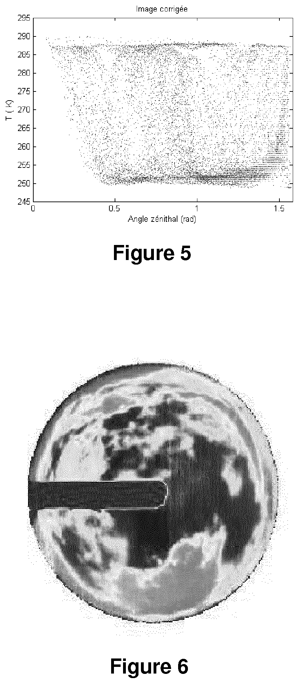

Une fois que le modèle colle avec l'information comprise dans l'image, on peut retrouver les températures de brillance équivalentes au zénith a pour toute l'image (Figure 5, l'axe des x représentant l'angle zénithal (rad), l'axe des ordonnées représentant la Température (K)).

La Figure 6 montre l'image corrigée après traitement.

En variante, au lieu d'obtenir la luminance ciel clair en synthétisant la distribution verticale de la température et de l'humidité et en utilisant ces profils comme entrée du modèle de transfert radiatif, il est possible, dans le cadre de la présente invention, de simuler toutes les luminances ciel clair possibles à partir d'un grand nombre de profils obtenus par des données météorologiques disponibles en archive. Dans le cadre de cette variante, on cherche la corrélation entre les luminances simulées et les températures de point de rosée mesurées associées (mesurées au même endroit et au même instant). On en déduit une relation empirique (quadratique) entre température de point de rosée et luminance ciel clair.

Les moyens de mesure, mis en oeuvre dans le cadre du procédé selon la présente invention, mesurent la température et l'humidité au sol. On en déduit la température de point de rosée à partir de la formule de Magnus-Tetens. A partir de la relation empirique, on obtient la luminance ciel clair correspondant à cette température de point de rosée.

Selon l'invention, l'étape e) de traitement de l'ensemble des données comprend une étape d'inversion du modèle de transfert radiatif permettant de déterminer la distribution spatiale horizontale de l'épaisseur optique et de l'altitude de l'unique couche nuageuse ou de l'ensemble de nuages épais dans ladite zone d'observation du ciel. Un nuage est dit « épais » si la température de sa base perçue par l'instrument est supérieure à un seuil défini préalablement pour un point du ciel et un instant donné. Préalablement, pour un lieu donné, la luminance de tout type de nuage épais (réaliste pour une saison et des conditions locales données) est modélisée par un modèle de transfert radiatif à partir des propriétés physiques (au moins l'altitude et l'épaisseur géométrique) et microphysiques (au moins le diamètre des particules d'eau ou de glace constituant le nuage, la concentration en particule et l'épaisseur optique) des nuages. Les valeurs de ces propriétés sont choisies de manière à être réalistes pour un nuage par rapport à la saison, au lieu géographique considéré et aux conditions météorologiques de l'instant considéré. Cette modélisation de luminance est ensuite effectuée pour différentes altitudes. La luminance de la partie d'atmosphère claire (non-nuageuse) sous le nuage est également modélisée. Dans le cadre du procédé selon la présente invention, on postule une relation entre la luminance perçue par l'instrument de mesure, et les luminances modélisées d'un nuage épais et de sa couche atmosphérique

située en dessous : $L_{instrument}$=*Lnuage épais+ Lciel clair sous le nuage=Lnuage épais+x\*Lciel clair totale* La construction de "*look-up table*" (ou abaque ou table de correspondance) fait correspondre pour une valeur de luminance ciel clair donnée: l'altitude, la luminance perçue par l'instrument de mesure, x , la luminance de l'atmosphère sous le nuage et la luminance du nuage. Toutes les "*look-up tables*" (ou abaques ou tables de correspondance) nécessaires sont préalablement construites, au moins une par valeur de luminance ciel clair réaliste.

Une fois la mesure de luminance perçue par l'instrument de mesure effectuée, on reprend la valeur de luminance ciel clair connue pour choisir la bonne look up table (ou abaque ou table de correspondance) et en déduire l'altitude du nuage.

Par temps clair, l'instrument mis en oeuvre dans le cadre du procédé selon la présente invention peut percevoir une traînée de condensation suite au passage d'un avion (connu sous le nom de « *contrail* « en terminologie anglo-saxonne). Si un « *contrail* » est perçu, la consultation de données publiques sur le trafic aérien telles que celles disponibles sur www.flightradar24.com permet de connaître à 30 cm près (1 pied) l'altitude de l'avion qui a généré ce « *contrail* » et donc l'altitude du nuage observé. La luminance de ce nuage artificiel perçue par l'instrument de mesure permet alors de déduire une association vérifiée entre luminance et altitude du nuage. Cela permet d'établir un point de calibration pour les hautes altitudes (environ 12000 m). Cela apporte ainsi une information supplémentaire pour les nuages observés dans le même champ de vue ou bien dans les heures qui suivent ou qui précèdent le passage de cet avion, en supposant que l'état de l'atmosphère n'a pas modifié significativement la luminance ciel clair.

**Revendications**

1. Procédé de détection pour l'identification et le suivi d'un ou plusieurs nuages épais dans une zone du ciel observée depuis le sol, dans lequel on réalise les étapes suivantes :

   a) collecter au moins une partie des flux infrarouges thermiques émis dans ladite zone du ciel observée et les envoyer vers au moins un détecteur (12) infrarouge thermique, ledit au moins un détecteur (12) infrarouge thermique comportant au moins un capteur sensible auxdits flux dans une bande de longueurs d'onde déterminée,
   b) réaliser au moins une mesure de la température et de l'humidité relative de l'air réelles au niveau du sol et en déduire la distribution verticale de la température et de la vapeur d'eau,
   c) simuler ou obtenir l'ensemble de données relatives au signal infrarouge thermique émis par un ciel de référence pour ladite distribution verticale de température et de vapeur d'eau ainsi déduite,
   d) soustraire de l'ensemble de données mesurées par ledit au moins capteur, l'ensemble de données ainsi simulées ou obtenues de manière à déterminer la présence ou non d'un ou plusieurs nuages dans ladite zone d'observation du ciel,
   e) traiter l'ensemble des données ainsi obtenues pour déterminer l'épaisseur optique et l'altitude de chaque nuage dans ladite d'observation du ciel, ledit procédé étant **caractérisé en ce que** l'étape e) de traitement de l'ensemble des données comprend une étape de détermination de l'altitude d'un nuage en postulant une relation entre la luminance perçue par l'instrument de mesure, et les luminances modélisées d'un nuage et de sa couche atmosphérique située en dessous et en mettant en oeuvre des tables de correspondance de type « *look-up tables* », la relation entre la luminance perçue par l'instrument de mesure, et les luminances modélisées d'un nuage épais et de sa couche atmosphérique située en dessous, étant définie comme : $L_{instrument}$=*Lnuage épais+ Lciel clair sous le nuage=Lnuage épais+x\*Lciel clair totale* la construction d'une table de correspondance faisant correspondre pour une valeur de luminance ciel clair donnée: l'altitude, la luminance perçue par l'instrument de mesure, la valeur x , la luminance de l'atmosphère sous le nuage et la luminance du nuage, et **en ce qu'**une fois la mesure de luminance perçue par l'instrument de mesure effectuée, on reprend la valeur de luminance ciel clair connue pour choisir la bonne table de correspondance et en déduire l'altitude du nuage

2. Procédé selon la revendication 1, **caractérisé en ce que** préalablement à l'étape a), on a étalonné ledit au moins un capteur dudit détecteur (12) infrarouge thermique en mettant en oeuvre une seule surface de référence à température ambiante.

3. Procédé selon la revendication 1 ou 2, **caractérisé en ce que** l'étape e) de traitement de l'ensemble des données comprend une étape d'inversion du modèle de transfert radiatif permettant de déterminer la distribution spatiale horizontale de l'épaisseur optique et de l'altitude de l'unique couche nuageuse ou de l'ensemble de nuages dans ladite zone d'observation du ciel.

4. Procédé selon la revendication 3, **caractérisé en ce que** pour calculer l'épaisseur optique et l'altitude de chaque nuage aux longueurs d'onde d'intérêts, on détermine préalablement le modèle de nuage et on simule le rayonnement de chaque nuage en fonction du modèle de nuage ainsi déterminé.

5. Procédé selon l'une quelconque des revendications 1 à 4, **caractérisé en ce qu'**on utilise un capteur optique définissant une zone d'observation du ciel à partir du sol d'au moins 4,6 stéradians pour déterminer à partir de la texture et de la couleur de chaque nuage détecté par ledit capteur optique, le type de nuage correspondant pour en déduire une plage d'altitudes de chaque nuage présent dans ladite zone d'observation du ciel.

6. Procédé selon la revendication 1, **caractérisé en ce que** l'étape e) de traitement de l'ensemble des données comprend une étape d'établissement d'un point de calibration en analysant une trainée de condensation suite au passage d'un avion.

7. Ensemble de détection pour la mise en oeuvre du procédé d'identification et de suivi d'un ou plusieurs nuages épais dans une zone du ciel observée depuis le sol selon l'une quelconque des revendications 1 à 6, ledit ensemble comprenant :

   - un miroir (11) ayant une surface de miroir (11) courbe convexe ou conique, la surface dudit miroir (11) étant tournée vers au moins un détecteur (12) infrarouge thermique pour collecter au moins une partie des flux infrarouges thermiques émis dans ladite zone du ciel observée et les renvoyer vers ledit au moins un détecteur (12) infrarouge thermique,
   - ledit au moins un détecteur (12) infrarouge thermique comportant au moins un capteur sensible auxdits flux dans une bande de longueurs d'onde déterminée, chaque capteur émettant des signaux de mesure,
   - des moyens de traitement (13) des signaux émis par ledit ou lesdits capteurs,
   - au moins un thermomètre (14) et au moins un hygromètre (15) pour mesurer la température et l'humidité relative de l'air réelles au niveau du sol et reliés auxdits moyens de traitement, et
   - lesdits moyens de traitement (13) permettant de déterminer à partir de ces mesures la distribution verticale de température et de vapeur d'eau pour corriger la contribution de l'atmosphère entre ledit ensemble et le ou les nuages.

8. Ensemble selon la revendication 7, **caractérisé en ce que** ledit au moins un détecteur (12) infrarouge thermique comporte une pluralité d'éléments sensibles au rayonnement infrarouge agencés selon une matrice, lesdits éléments sensibles étant des microbolomètres.

9. Ensemble selon la revendication 7 ou 8, **caractérisé en ce qu'**au moins lesdits signaux émis par ledit ou lesdits capteurs sont des signaux de communication sans fil, lesdits moyens de traitement (13) comportant des moyens de réception pour recevoir lesdits signaux de communication sans fil émis par ledit ou lesdits capteurs.

10. Ensemble selon l'une quelconque des revendications 7 à 9, **caractérisé en ce que** D étant la distance séparant ledit au moins un détecteur (12) dudit miroir (11) et A étant l'angle d'ouverture dudit au moins un détecteur (12), ledit miroir (11) présente un rayon R au moins égal à D x tan(A/2).

11. Ensemble selon l'une quelconque des revendications 7 à 10, **caractérisé en ce que** ledit ensemble comprend des moyens de communication sur un réseau mobile du type GSM/GPRS/UMTS, un réseau filaire fixe ou encore sur un réseau de communication sans fil du type Wi-Fi pour collecter des données, telles que des données météorologiques du lieu de déploiement dudit ensemble, et/ou envoyer des données liées aux résultats obtenues par lesdits moyens de traitement.

12. Procédé selon l'une quelconque des revendications 1 à 6, **caractérisé en ce qu'**on détermine à partir de l'ensemble de données ainsi obtenu à un instant t le déplacement et l'évolution à un instant t + $\Delta$t de chacun des nuages épais de ladite zone
d'observation.

**Patentansprüche**

1. Detektionsverfahren zum Identifizieren und Verfolgen von einer oder mehreren dicken Wolken in einer Zone des Himmels, die vom Boden aus beobachtet wird, wobei die folgenden Schritte ausgeführt werden:

a) Sammeln von mindestens einem Teil der Infrarot-Wärmeströme, die in die beobachtete Zone des Himmels emittiert werden, und Senden derselben zu mindestens einem Infrarot-Wärmedetektor (12), wobei der mindestens eine Infrarot-Wärmedetektor (12) mindestens einen Sensor umfasst, der für die Ströme in einem bestimmten Wellenlängenband empfindlich ist,

b) Ausführen von mindestens einer Messung der tatsächlichen Temperatur und der tatsächlichen relativen Luftfeuchtigkeit im Bereich des Bodens, und Ableiten der vertikalen Verteilung der Temperatur und des Wasserdampfs daraus,

c) Simulieren oder Erhalten des Satzes an Daten, die sich auf das von einem Referenzhimmel emittierte Infrarot-Wärmesignal beziehen, für die so abgeleitete vertikale Temperatur- und Wasserdampfverteilung,

d) Subtrahieren des Satzes so simulierter oder erhaltener Daten von dem Satz an Daten, die von dem mindestens einen Sensor gemessen wurden, um das Vorhandensein oder nicht von einer oder mehreren Wolken in der Beobachtungszone des Himmels zu bestimmen,

e) Verarbeiten des Satzes der so erhaltenen Daten, um die optische Dicke und die Höhe jeder Wolke in der Beobachtung des Himmels zu bestimmen,

wobei das Verfahren **dadurch gekennzeichnet ist, dass** der Schritt e) des Verarbeitens des Satzes der Daten einen Schritt des Bestimmens der Höhe einer Wolke unter Postulieren einer Beziehung zwischen der vom Messinstrument wahrgenommenen Luminanz und den modellierten Luminanzen einer Wolke und ihrer darunterliegenden atmosphärischen Schicht, und unter Einsetzen von Entsprechungstabellen vom Typ "Lookup-Tabellen" umfasst, wobei die Beziehung zwischen der vom Messinstrument wahrgenommenen Luminanz und den modellierten Luminanzen einer dicken Wolke und ihrer darunterliegenden atmosphärischen Schicht wie folgt definiert ist:

$$L_{Instrument} = L\text{dicke Wolke} + L\text{klarer Himmel unter der Wolke} = L\text{dicke Wolke} + x*L\text{klarer Himmel gesamt}$$

wobei der Aufbau einer Entsprechungstabelle für einen gegebenen Luminanzwert des klaren Himmels in Entsprechung bringt: die Höhe, die vom Messinstrument wahrgenommene Luminanz, den Wert x, die Luminanz der Atmosphäre unter der Wolke und die Luminanz der Wolke, und dadurch, dass sobald die Messung der vom Messinstrument wahrgenommenen Luminanz erfolgt ist, der bekannte Luminanzwert des klaren Himmels herangezogen wird, um die richtige Entsprechungstabelle auszuwählen und daraus die Höhe der Wolke abzuleiten.

2. Verfahren nach Anspruch 1, **dadurch gekennzeichnet, dass** vor dem Schritt a) der mindestens eine Sensor des Infrarot-Wärmedetektors (12) unter Einsetzen einer einzigen Referenzfläche bei Umgebungstemperatur geeicht wurde.

3. Verfahren nach Anspruch 1 oder 2, **dadurch gekennzeichnet, dass** der Schritt e) des Verarbeitens des Satzes der Daten einen Schritt des Invertierens des Strahlungstransfermodells umfasst, der es ermöglicht, die horizontale räumliche Verteilung der optischen Dicke und der Höhe der einzelnen Wolkenschicht oder der Wolkenanordnung in der Beobachtungszone des Himmels zu bestimmen.

4. Verfahren nach Anspruch 3, **dadurch gekennzeichnet, dass**, um die optische Dicke und die Höhe jeder Wolke bei den interessierenden Wellenlängen zu berechnen, vorher das Wolkenmodell bestimmt wird und die Strahlung jeder Wolke in Abhängigkeit von dem so bestimmten Wolkenmodell simuliert wird.

5. Verfahren nach einem der Ansprüche 1 bis 4, **dadurch gekennzeichnet, dass** ein optischer Sensor verwendet wird, der eine Beobachtungszone des Himmels vom Boden aus von mindestens 4,6 Steradianten definiert, um aus der Textur und der Farbe jeder vom optischen Sensor detektierten Wolke den entsprechenden Wolkentyp zu bestimmen, um daraus einen Höhenbereich jeder Wolke abzuleiten, die in der Beobachtungszone des Himmels vorhanden ist.

6. Verfahren nach Anspruch 1, **dadurch gekennzeichnet, dass** der Schritt e) des Verarbeitens des Satzes der Daten einen Schritt des Festlegens eines Kalibrierungspunktes unter Analysieren eines Kondensationsstreifens infolge des Durchflugs eines Flugzeugs umfasst.

7. Detektionsanordnung zum Umsetzen des Verfahrens zum Identifizieren und Verfolgen von einer oder mehreren dicken Wolken in einer vom Boden aus beobachteten Zone des Himmels nach einem der Ansprüche 1 bis 6, wobei die Anordnung umfasst:

- einen Spiegel (11), der eine konvex oder konisch gekrümmte Spiegelfläche (11) aufweist, wobei die Fläche des Spiegels (11) mindestens einem Infrarot-Wärmedetektor (12) zugewandt ist, um mindestens einen Teil der Infrarot-Wärmeströme, die in die beobachtete Zone des Himmels emittiert werden, zu sammeln, und dieselben zu dem mindestens einen Infrarot-Wärmedetektor (12) weiterzusenden,

- wobei der mindestens eine Infrarot-Wärmedetektor (12) mindestens einen Sensor umfasst, der für die Ströme in einem bestimmten Wellenlängenband empfindlich ist, wobei jeder Sensor Messsignale emittiert,
- Mittel zum Verarbeiten (13) der von dem oder den Sensoren emittierten Signale,
- mindestens ein Thermometer (14) und mindestens ein Hygrometer (15), um die tatsächliche Temperatur und die tatsächliche relative Luftfeuchtigkeit im Bereich des Bodens zu messen, und mit den Verarbeitungsmitteln verbunden, und
- wobei die Verarbeitungsmittel (13) ermöglichen, aus diesen Messungen die vertikale Temperatur- und Wasserdampfverteilung zu bestimmen, um den Beitrag der Atmosphäre zwischen der Anordnung und der oder den Wolken zu korrigieren.

8.  Anordnung nach Anspruch 7, **dadurch gekennzeichnet, dass** der mindestens eine Infrarot-Wärmedetektor (12) eine Vielzahl von für die Infrarotstrahlung empfindlichen Elementen umfasst, die gemäß einer Matrix angeordnet sind, wobei die empfindlichen Elemente Mikrobolometer sind.

9.  Anordnung nach Anspruch 7 oder 8, **dadurch gekennzeichnet, dass** mindestens die von dem oder den Sensoren emittierten Signale Drahtloskommunikationssignale sind, wobei die Verarbeitungsmittel (13) Empfangsmittel umfassen, um die von dem oder den Sensoren emittierten Drahtloskommunikationssignale zu empfangen.

10. Anordnung nach einem der Ansprüche 7 bis 9, **dadurch gekennzeichnet, dass** wenn D der Abstand ist, der den mindestens einen Detektor (12) vom Spiegel (11) trennt, und A der Öffnungswinkel des mindestens einen Detektors (12) ist, der Spiegel (11) einen Radius R von mindestens gleich D x tan(A/2) aufweist.

11. Anordnung nach einem der Ansprüche 7 bis 10, **dadurch gekennzeichnet, dass** die Anordnung Mittel zur Kommunikation in einem Mobilnetz vom Typ GSM/GPRS/UMTS, einem stationären drahtgebundenen Netz oder auch in einem Drahtloskommunikationsnetz vom Typ Wi-Fi umfasst, um Daten wie etwa meteorologische Daten vom Einsatzort der Anordnung zu sammeln und/oder Daten, die mit den von den Verarbeitungsmitteln erhaltenen Ergebnissen verbunden sind, zu senden.

12. Verfahren nach einem der Ansprüche 1 bis 6, **dadurch gekennzeichnet, dass** aus dem so zu einem Zeitpunkt t erhaltenen Datensatz die Bewegung und die Entwicklung zu einem Zeitpunkt t + Δt jeder der dicken Wolken in der Beobachtungszone bestimmt werden.

## Claims

1.  Method of detection for identifying and monitoring one or more thick clouds in an area of the sky observed from the ground, wherein the following steps are carried out:

    a) collecting at least one portion of the thermal-infrared fluxes emitted in said observed area of the sky and sending same to at least one thermal-infrared detector (12), said at least one thermal-infrared detector (12) comprising at least one sensor sensitive to said fluxes in a predetermined wavelength band,
    b) taking at least one measurement of the actual temperature and relative humidity at ground level and deducing the vertical distribution of the temperature and water vapour therefrom,
    c) simulating or obtaining all of the data relative to the thermal-infrared signal emitted by a reference sky for said vertical distribution of temperature and water vapour thus deduced,
    d) subtracting, from the entire dataset measured by said at least one sensor, the set of data thus simulated or obtained such as to determine the presence or absence of one or more clouds in said observation area of the sky,
    e) processing the dataset thus obtained in order to determine the optical thickness and the altitude of each cloud in said observation area of the sky,
    said method being **characterised in that** the step e) of processing the dataset comprises a step of determining the altitude of a cloud by postulating a relationship between the luminance perceived by the measuring instrument, and the modelled luminances of a cloud and of the atmospheric layer thereof located underneath and by implementing correspondence tables of the "look-up" type, with the relationship between the luminance perceived by the measuring instrument, and the modelled luminances of a thick cloud and of the atmospheric layer thereof located underneath, being defined as:

    $L_{instrument}=Lthick\ cloud+ Lclear\ sky\ under\ the\ cloud=Lthick\ cloud+x*Ltotal\ clear\ sky$

    with the construction of a look-up table causing to correspond for a given clear sky luminance value: the altitude, the luminance perceived by the measuring instrument, the value x, the luminance of the atmosphere under the cloud and the luminance of the cloud, and **in that** once the measurement of the luminance perceived by the measuring instrument is taken, the known value for the clear sky luminance is used to choose the correct look-up table and to deduce the altitude of the cloud therefrom.

2. Method according to claim 1, **characterised in that** prior to the step a), said at least one sensor of said thermal-infrared detector (12) has been calibrated by implementing a single reference surface at ambient temperature.

3. Method according to claim 1 or 2, **characterised in that** the step e) of processing the dataset comprises a step of inverting the radiative transfer model making it possible to determine the horizontal spatial distribution of the optical thickness and of the altitude of the single cloud layer or of all of the clouds in said area of the sky observed.

4. Method according to claim 3, **characterised in that** in order to calculate the optical thickness and the altitude of each cloud at the interest wavelengths, the cloud model is determined beforehand and the radiation of each cloud is simulated according to the cloud model thus determined.

5. Method according to any of claims 1 to 4, **characterised in that** an optical sensor is used that defines an area of the sky observed from the ground of at least 4.6 steradians in order to determine from the texture and from the colour of each cloud detected by said optical sensor, the corresponding type of cloud in order to deduce therefrom a range of altitudes of each cloud present in said area of the sky observed.

6. Method according to claim 1, **characterised in that** the step e) of processing the dataset comprises a step of establishing a point of calibration by analysing a vapour trail following the passage of an aircraft.

7. Detection unit for the implementation of the method for identifying and for monitoring one or more thick clouds in an area of the sky observed from the ground according to any of claims 1 to 6, said unit comprising:

- a mirror (11) having a curved convex or conical mirror surface (11), with the surface of said mirror (11) being turned towards at least one thermal-infrared detector (12) for collecting at least one portion of the thermal-infrared fluxes emitted in said observed area of the sky and sending same to said at least one thermal-infrared detector (12),
- said at least one thermal-infrared detector (12) comprising at least one sensor that is sensitive to said fluxes in a determined wavelength band, each sensor emitting measurement signals,
- means for processing (13) signals emitted by said or said sensors,
- at least one thermometer (14) and at least one hygrometer (15) in order to measure the actual temperature and relative humidity of the air at ground level and connected to said means for processing, and
- said means for processing (13) making it possible to determine from these measurements the vertical distribution of the temperature and water vapour in order to correct the contribution of the atmosphere between said unit and the cloud or clouds.

8. Unit according to claim 7, **characterised in that** said at least one thermal-infrared detector (12) comprises a plurality of elements that are sensitive to the infrared radiation arranged according to a matrix, said sensitive elements being microbolometers.

9. Unit according to claim 7 or 8, **characterised in that** at least said signals emitted by said sensor or sensors are wireless communication signals, said means for processing (13) comprising means of receiving for receiving said wireless communication signals emitted by said sensor or sensors.

10. Unit according to any of claims 7 to 9, **characterised in that** D being the distance that separated said at least one detector (12) from said mirror (11) and A being the aperture angle of said at least one detector (12), said mirror (11) has a radius R at least equal to D x tan(A/2).

11. Unit according to any of claims 7 to 10, **characterised in that** said unit comprises means of communication over a mobile network of the GSM/GPRS/UMTS type, a fixed wired network or over a wireless communication network of the Wi-Fi type in order to collect data, such as meteorological data of the place of deployment of sad unit, and/or send data linked to the results obtained by said means of processing.

12. Method according to any of claims 1 to 6, **characterised in that** from the dataset thus obtained at an instant t is determined the displacement and the change at an instant t + Δt of each one of the thick clouds of said observation area.

Figure 1

Figure 2

**Figure 3**

**Figure 4**

Figure 5

Figure 6